# EUROPÄISCHE PATENTSCHRIFT

(11) **EP 1 268 283 B1**
(45) Veröffentlichungstag und Bekanntmachung des Hinweises auf die Patenterteilung: **02.06.2004**
(21) Anmeldenummer: 01940130.6
(22) Anmeldetag: 06.04.2001
(51) Int. Cl.: G06K 19/077, B31D 1/02, B65C 1/00

(54) **VERFAHREN UND VORRICHTUNG ZUM HERSTELLEN VON DATENTRÄGERN MIT INTEGRIERTEM TRANSPONDER**
METHOD AND DEVICE FOR PRODUCING DATA CARRIERS EQUIPPED WITH AN INTEGRATED TRANSPONDER
PROCEDE ET DISPOSITIF DE PRODUCTION DES SUPPORTS DE DONNEES POURVUS D'UN TRANSPONDEUR INTEGRE

(30) Priorität: 07.04.2000 DE 10017431
(43) Veröffentlichungstag der Anmeldung: 02.01.2003
(73) Patentinhaber: MELZER MASCHINENBAU GmbH, D-58332 Schwelm (DE)
(72) Erfinder: MELZER, Roland, 58332 Schwelm (DE); MELZER, Rainer, 58332 Schwelm (DE)
(74) Vertreter: Sparing, Rolf Klaus
(86) Internationale Anmeldenummer: PCT/DE2001/001380
(87) Internationale Veröffentlichungsnummer: WO 2001/076949

(56) Entgegenhaltungen:
- WO-A-98/32099
- DE-A- 19 753 500
- DE-C- 19 617 537
- US-A- 5 867 102
- US-A- 6 019 865

## Beschreibung

Die Erfindung betrifft ein Verfahren nach dem Oberbegriff des Anspruchs 1. Die Erfindung betrifft ferner eine Vorrichtung nach dem Oberbegriff des Anspruchs 13.

Aus der Praxis sind Verfahren und Vorrichtungen zum kontinuierlichen Herstellen von mit Transpondern ausgerüsteten selbstklebenden Etiketten bekannt, bei denen eine erste Bahn von mit einer Klebeseite versehenen Etiketten mit einer zweiten Bahn von Transpondern, die von einer endlosen Bahn zugeführt werden, belegt wird und die resultierende Bahn auf der dem Etikett abgewandten Seite der Transponder mit einem Doppelkleber belegt wird. Das bekannte Verfahren erlaubt die Herstellung großer Stückzahlen und hohe Arbeitsgeschwindigkeiten, ist jedoch mit einer Reihe von Unzulänglichkeiten behaftet Ein erstes Problem besteht darin, daß es bei dem bekannten Verfahren nicht möglich ist, defekte Transponder im laufenden Betrieb auszusondern. Dadurch kommt es zu der Herstellung von defekten Etiketten, was besonders dann nachteilig ist, wenn die Etiketten bereits bedruckt und personalisiert sind. Die Ausschußware ist in aufwendiger Nacharbeit zu ersetzen. Ein weiterer Nachteil besteht darin, daß der Doppelkleber auch auf solche Bereiche der Bahnen aufgetragen wird, die an sich Verschnitt darstellen oder den Transponder überragen und ohnehin kleben. Ein weiteres Problem besteht im Positionierungsaufwand, um bei kontinuierlichem Betrieb ein Verlaufen einer der Bahnen zu unterbinden. Zudem kommt es bei der Zuführung eines endlosen Bandes von Doppelkleber schnell zu Verunreinigungen in der Anlage, insbesondere bei Störungen, die zu beträchtlichem Stillstand und Wartungsaufwand führen. Außerdem ist ein späterer Schnitt der resultierenden Bahn wegen der stets vorgesehenen drei Lagen erschwert. Schließlich besteht ein weiteres Problem darin, daß aufgrund von Ungenauigkeiten bei der Positionierung der Transponder die Packungsdichte der endlosen Bahn, in der die Transponder zu einer Rolle aufgewickelt sind, gering ist.

DE-A-198 27 592 beschreibt eine Einrichtung zum Herstellen von mit Transpondern versehenen Etiketten, bei der auf einer Vorratsrolle aufgewickelte, mit einer Klebeschicht versehene und auf einer Schutzfolie unmittelbar benachbart angeordnete Sicherungselemente in einem größeren Abstand mit ihrer Klebeseite mittels einer mit Unterdruck arbeitenden Walze auf eine weitere Schutzfolie umgesetzt werden und in einer nachfolgenden Station mit einem bereits vereinzelten Etikett überklebt werden. Hierzu wird die kontinuierliche Umfangsgeschwindigkeit der Walze an die Fördergeschwindigkeit der anderen Schutzfolie angepaßt. Nachteilig bei der bekannten Einrichtung ist zunächst die Tatsache, daß ein Ausschleusen von defekten Sicherungselementen nicht vorgesehen ist. Zudem muß die erste Schutzfolie aufgewickelt werden. Des weiteren sind die Sicherungselemente in einem vorhergehenden Arbeitsprozeß mit einer Klebeschicht zu konfektionieren und zu vereinzeln. Die zum Einsatz gelangenden Klebemittel sind kostspielig, so daß bei defektem Sicherungselement erhöhte Kosten resultieren. Ferner findet die Verbindung der Sicherungselemente mit den Etiketten dadurch statt, daß die bereits auf der Schutzfolie aufgeklebten Sicherungselemente von einem einzelnen Etikett überklebt werden, was zu ungünstigen Toleranzen führt. Insgesamt sind die bereits vereinzelten Etiketten schwierig zu handhaben.

WO-A-99 00 784 beschreibt eine Einrichtung zum Herstellen von mit Transpondern versehenen Etiketten, bei der auf einer Vorratsrolle aufgewickelte, mit einer Klebeschicht versehene und auf einer Schutzfolie unmittelbar benachbart angeordnete Sicherungselemente in einem größeren Abstand mit ihrer Klebeseite auf eine weitere Schutzfolie umgesetzt werden und in einer nachfolgenden Station mit einem bereits vereinzelten Etikett überklebt werden. Zwar ist ein diskontinuierlicher Betrieb möglich, jedoch erfordert dieser eine aufwendige Bahnkantenregelung. Im übrigen weist die bekannte Einrichtung gleichfalls die vorstehend aufgeführten Nachteile auf.

DE-A-197 22 327 beschreibt eine Einrichtung zum Herstellen eines mehrlagigen Etiketts, welche eine einseitig mit einer Klebeschicht versehene Trägerbahn mit von einer Vorratsrolle abgezogenen Abschnitten einer Beschichtungsbahn versieht, wobei das Abtrennen der Abschnitte von der Beschichtungsbahn mittels einer Schneidwalze während des Zusammenführens oder kurz vor dem Zusammenführen erfolgt. Da die Trägerbahn mit voreingestellter Geschwindigkeit gefördert wird, muß der abgetrennte Abschnitt jeweils auf die Geschwindigkeit der Trägerbahn beschleunigt werden. Hierdurch sind nur vergleichsweise langsame Fördergeschwindigkeiten bei noch hinnehmbaren Toleranzschwankungen möglich. Eine Prüfung und Aussonderung von fehlerhaften Abschnitten ist nicht vorgesehen, wodurch erst bei der Prüfung des mehrlagigen Etiketts fehlerhafte Teile zu höheren Kosten ausgesondert werden müssen.

Aus der Praxis ist ferner ein Verfahren zur Herstellung von mit einem Transponder ausgerüsteten Karten bekannt, bei dem der Transponder in einer Zwischenlage eines Kunststoffkartenrohlings angeordnet wird und die Kunststoffkarte anschließend durch Laminieren hergestellt wird. Dieses Verfahren ermöglicht die Herstellung eines Datenträgers mit langer Lebensdauer, der gegen mechanische Beschädigungen kaum empfindlich ist, verursacht aber hohe Kosten und eignet sich folglich nicht für Einweg-Anwendungen.

US-A-6 019 865 beschreibt die Herstellung von Etiketten mit Transpondern in verschiedenen Varianten, wobei von einer Rolle eine Transponderbahn abgezogen und von einer Schneideinrichtung ein Transponder vereinzelt und dieser auf einer Klebefläche einer Etikettenbahn abgelegt wird, wobei die dem Transponder abgewandte Seite noch mit einem Drucker bedruckt sein kann. Hierzu ist eine Vorrichtung zum Herstellen von Datenträgem mit integrierten Transpondern mit Mitteln zum Zuführen einer Bahn von Etiketten und Mitteln zum Zuführen einer Bahn aus aneinandergrenzenden Transpondern vorgesehen, bei der eine Station zum Schneiden und Vereinzeln der Transponder von der Transponderbahn vorgesehen ist, die die Transponder von der Bahn trennt und vereinzelt und an die Etikettenbahn einzeln übergibt. Die Überprüfung der Transponder erfolgt während des Druckens und/oder des Aufbringens des Transponders. Anspruch 1 ist von dieser Druckschrift abgegrenzt.

Es ist die Aufgabe der Erfindung, ein Verfahren nach dem Oberbegriff des Anspruchs 1 bzw. eine Vorrichtung nach dem Oberbegriff des Anspruchs 13 zu schaffen, die eine zuverlässige und kostengünstige Herstellung von Datenträgern mit integriertem Transponder ermöglichen.

Diese Aufgabe wird bei dem eingangs genannten Verfahren erfindungsgemäß mit den kennzeichnenden Merkmalen des Anspruchs 1 gelöst. Diese Aufgabe wird bei der eingangs genannten Vorrichtung mit den kennzeichnenden Merkmalen des Anspruchs 13 gelöst.

Datenträger im Sinne der Erfindung können mit einer Klebeschicht versehene Etiketten sein, die z.B. eine beschriftbare oder bedruckbare Seite aufweisen, und die vorteilhaft zum Adressieren von Postsendungen oder zum Versehen von Waren mit Beschriftungen geeignet sind. Ferner können die Datenträger auch in der Art von Karten oder Tickets ausgestaltet sein, die ohne aufgeklebt zu werden genutzt werden, z.B. Eintrittskarten z.B. für ein Theater oder Kino, Busfahrkarten, aber auch Kundenkarten in der Art von Kreditkarten oder Mitarbeiterkarten, die z.B. zugleich die Legitimation zum Zutritt in bestimmte Räume eines Unternehmens drahtlos überprüfen.

Das erfindungsgemäße Verfahren ermöglicht es, die Transponder bereits vor dem Verbinden mit der Etikettenbahn von einer aufgerollten Transponderbahn abzutrennen, wodurch unterschiedliche Abmessungen von Etikett und Transponder miteinander kombinierbar werden. Insbesondere ist es möglich, den Transponder an einer vorbestimmten Stelle des zugeordneten Etiketts zu positionieren, beispielsweise mittig oder im Bereich einer Ecke. Die Transponder können somit auf der Transponderbahn dicht benachbart angeordnet werden, wodurch der zur Verfügung stehende Platz günstig genutzt wird.

Bei der Etikettenbahn handelt es sich vorzugsweise um eine einseitig klebende Papierbahn. Alternativ kann aber auch eine selbstklebende Folie aus Kunststoff eingesetzt werden. Insbesondere kommt eine bereits bedruckte Bahn, die z.B. vorgedruckte Felder zum Ausfüllen oder eine Produktbezeichnung aufweist, als Etikettenbahn in Betracht.

Erfindungsgemäß werden die Transponder vor dem Zusammenführen mit dem Etikett auf Funktion überprüft, um die Verbindung eines funktionsunfähigen Transponders mit einem Etikett rechtzeitig zu unterbinden. Das Ergebnis der Funktionsprüfung entscheidet darüber, ob der einige Takte später als vorderster Transponder von der Transponderbahn abgeschnittene Transponder dem Etikett zugeführt wird, oder aber als Schlechtteil ausgesondert wird. Hierdurch ist es in vorteilhafter Weise möglich, bereits sehr früh in der Wertschöpfungskette defekte Transponder aus einer weiteren Verarbeitung heraus zu halten. Insbesondere wenn die Datenträger in besonderer Weise individualisiert oder personalisiert sind derart, daß jeder Datenträger einzigartig ist und keine Dublette aufweist, wird dadurch sichergestellt, daß nicht für den Austausch Fehler behafteter mit integriertem Transponder versehener Datenträger erhebliche Mühe aufgewandt werden muß. Die ausgeschleusten Transponder können gleichwohl einer Nachbearbeitung zugeführt werden, was nach dem Verarbeiten zu einem fertigen Etikett in der Regel nicht mehr möglich ist.

Es ist möglich, einen Zwischenschnitt vor dem Abtrennen des Transponders vorzusehen, mit dem ein Abschnitt der Transponderbahn, der zwischen zwei benachbarten Transpondem vorgesehen ist, aus der Transponderbahn ausgeschnitten und dem Ausschußbehälter zugeführt wird. Der Abschnitt wird wie ein Schlechtteil abgeführt, und wenn ein Schlechtteil abgeführt wird vorzugsweise ohne Abtrennen mit dem defekten Transponder. Durch das Vorsehen eines Zwischenschnitts ist es möglich, das Gewicht der Datenträger soweit wie möglich zu reduzieren, und zugleich auch solche Transponderbahnen zu verarbeiten, die größere Abstände zwischen den Transpondern aufweisen als unbedingt erforderlich.

Für die Herstellung der Verbindung zwischen Etikett und Transponder wird die Transponderbahn vorzugsweise radial einer Übergabewalze zugeführt, auf der der oder die vordersten Transponder gehalten werden und der vorderste Transponder von der Transponderbahn abgelängt wird. Durch das Abtrennen jeweils nur des vordersten Transponders ist sichergestellt, daß die Führung der Transponderbahn über Walzenpaare und dgl. vom Schneidvorgang unbeeinträchtigt bleibt. Für das Abtrennen wird die zugeführte Transponderbahn jeweils angehalten.

Vorzugsweise ist die Übergabewalze als Hohlwalze ausgebildet, an deren Innenseite zum Teil ein Überdruck, zum Teil ein Unterdruck anliegt, wobei die örtlich herrschenden Druckverhältnisse über Löcher in der Hohlwalze auf den auf den Löchern aufliegenden Transponder bzw. das Transponderband übertragen werden. Insbesondere wird auf diese Weise der vorderste Transponder vermittels des durch die Löcher wirkenden Unterdrucks an die Hohlwalze angesaugt und kann auch ohne Gegenwalze eine Schwenkbewegung von ca. 90° ausführen.

Auf diese Weise wird der vorderste, von der Transponderbahn abgetrennte Transponder in eine Stellung verlagert, in der sich dessen Vorderkante im wesentlichen parallel zum Verlauf der Etikettenbahn befindet, wobei zugleich darauf geachtet wird, daß die Vorderkante des Transponders zumindest in derselben Höhe angeordnet ist, in der der Transponder auf dem Etikett lagegenau aufgebracht werden soll. Eine Andrückwalze wird zum Zwecke der Berührung von Etikettenbahn und Transponder gegen die bedruckte Seite der Etikettenbahn in Richtung auf die Hohlwalze zugestellt, so daß die der Hohlwalze zugewandte Klebeseite der Etikettenbahn die vordere Stoßkante des Transponders berührt und bei einer anschließenden Verlagerung der Etikettenbahn mit führt. Die Andrückwalze wird nur so lange in Richtung auf die Walze verlagert, bis der Transponder von der Klebeseite der Etikettenbahn von der Hohlwalze abgenommen wurde, wodurch verhindert wird, daß die Klebeseite mit der Hohlwalze in Berührung gelangt.

Um den Vorschub der Transponderbahn präzise zu steuern wird vorzugsweise die Position der Transponderbahn anhand von Markierungen, die ggf. zugleich Bestandteile des Transponders sind, zum Beispiel optisch oder induktiv in einer Positionskontrollstation überprüft. Wenn die Positionskontrollstation bei bekanntem Transponderabstand auf der Transponderbahn hinreichend nahe an der Übergabe zu der Etikettenbahn gelegen ist, kann mit ausreichender Genauigkeit die reproduzierbare Zuführung der Transponder sichergestellt werden. Im Falle eines Über- oder Unterschreitens der entsprechend vorgesehenen Markierung ist zweckmäßigerweise vorgesehen, daß die Zuführung des Transponderbandes entsprechend korrigiert wird. Ebenso können Markierungen an der Etikettenbahn vorgesehen sein, auch auf der Rückseite, um eine Synchronisation des Arbeitstaktes sicherzustellen.

Vorzugsweise wird in einer weiteren Station im Anschluß an das Aufbringen des Tansponders ein Nutzen von einer Doppelkleberbahn abgetrennt und auf den Transponder aufgelegt, wobei der Doppelkleber in der Regel zumindest die Fläche des Transponders belegt. Es ist möglich, den Bereich außerhalb des Transponders frei von Doppelkleber zu halten, wenn diese Etikettenfläche ohnehin klebend ausgebildet ist. Es ist aber alternativ möglich, einen Überstand des Doppelklebers vorzusehen, zum Beispiel um die Toleranzen zu erhöhen oder um einen allmählicheren Übergang in der Dicke des mit Transponder ausgebildeten Etiketts zu erreichen.

Der Doppelkleber wird in der Regel in einer endlosen Bahn angeliefert und von dieser vorzugsweise in einer Schneide- und Übergabestation nur jeweils ein Nutzen abgetrennt, der gerade für das an der Station vorbeigeführte Etikett erforderlich ist. Dadurch wird verhindert, daß ein endloses Band Doppelkleber in eine Arbeitsstation mit dem Etikett zusammengebracht werden muß, was insbesondere deshalb vorteilhaft ist, weil bei Störungen im Bereich der Schneide- und Übergabestation mit Doppelkleber erhebliche Verunreinigungen dieser Arbeitsstation diese dauerhaft außer Betrieb setzen können.

Der Schnitt des Transponders von der Transponderbahn bzw. des Doppelklebemutzens von der Doppelkleberbahn kann mit beliebigen Schneidmitteln erfolgen, zum Beispiel mittels Schneidrolle, Stanzmesser, Laser und dgl. Es ist hierbei vorzugsweise vorgesehen, daß die zu schneidende Bahn während des Schnitts steht, wobei die Standzeit sehr kurz bemessen sein kann. Hieraus resultiert, daß das Verfahren zur Herstellung der mit integrierten Transpondern ausgebildeten Etiketten kein kontinuierliches Verfahren ist, sondern ein getaktetes Verfahren, bei dem die Verlagerung der Etikettenbahn einerseits, des vordersten, von der Transponderbahn abgetrennten Transponders andererseits und des Nutzens, der von der Doppelkleberbahn abgetrennt wurde, synchronisiert sind. Gleichwohl erlaubt das Verfahren eine hohe Arbeitsgeschwindigkeit von weit über 100 Zyklen oder Takte pro Minute.

Um die Synchronisation der Arbeitsgänge des Verbindens des Transponders mit der Etikettenbahn und des Nutzens mit dem Transponder zu ermöglichen, ist vorzugsweise die Station, in der der Nutzen abgeschnitten und aufgebracht wird, in Richtung der Etikettenbahn verschiebbar ausgebildet, so daß bei sich ändernden Etikettengrößen bzw. Abständen der Transponder auf benachbarten Etiketten die Nutzen entsprechend im Takt an der richtigen Stelle aufgebracht werden können, ohne das hierfür die gesamte Rückseite des Etiketts mit einer Doppelkleberbahn belegt zu werden braucht.

Gemäß einer besonders bevorzugten Weiterbildung der Erfindung ist es möglich, die mit Transpondern versehene Etikettenbahn auf ein Substrat aufzukaschieren, wobei die Verbindung mit dem Substrat wahlweise durch die über den Transponder überstehende Klebeschicht der Etikettenbahn, eine zusätzliche Klebeschicht der vorstehend beschriebenen Art und/oder eine auf dem Substrat angeordnete Klebeschicht erfolgen kann. Das Szubstrat, das vorzugsweise aus Karton oder Kunststoff besteht, ermöglicht die Schaffung eines Datenträgers, der in der Art einer Kundenkarte, eines Busfahrscheins oder eines Parkhausetiketts ausgestaltet ist, insbesondere nur für einen kurzfristigen Einsatz gestaltet ist und gleichwohl einen Transponder aufweist.

Die mit dem erfindungsgemäßen Verfahren hergestellte Datenträgerbahn mit integrierten Transpondern weist als besondere Neuerung auf, daß sie ausschließlich aus Etiketten mit funktionsfähigen bzw. funktionsüberprüften Transpondern besteht, und daß keiner der Datenträger nachträglich aus der laufenden Bahn hinaus gelöst oder wieder hinein gefügt wurde. Hierdurch ist es möglich, die Datenträger auf der Datenträgerbahn in platzsparender Weise sehr eng anzuordnen, ohne Rücksicht auf das spätere Hinaustrennen von Datenträgern mit defekten Transpondern nehmen zu müssen. Hierdurch wird vorteilhaft eine hohe Packungsdichte der hergestellten Datenträgerbahn erzielt.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels näher erläutert.
- Fig. 1: zeigt schematisch einen bevorzugten Ablauf und Aufbau einer erfindungsgemäßen Vorrichtung zum Herstellen von selbstklebenden Etiketten.
- Fig. 2: zeigt die Verbindungsstation aus Fig. 1 zu einem späteren Zeitpunkt im Arbeitstakt.
- Fig. 3: zeigt die Verbindungsstation aus Fig. 2 zu einem noch späteren Zeitpunkt im Arbeitstakt.
- Fig. 4: zeigt die Verbindungsstation aus Fig. 3 zu einem noch späteren Zeitpunkt im Arbeitstakt.
- Fig. 5: zeigt eine ausschnittsweise perspektivische Ansicht eines abgewandelten Ausführungsbeispiels der erfindungsgemäßen Vorrichtung.

Die insgesamt mit Bezugszeichen 1 bezeichnete Vorrichtung zum Herstellen von selbstklebenden Etiketten mit einem integrierten Transponder umfaßt eine erste Rolle 2, auf der eine endlose Bahn 5 von Etiketten aufgewickelt ist, eine zweite Rolle 3, auf der eine endlose Bahn 6 von Transpondern aufgewickelt ist, und eine dritte Rolle 4, auf der eine endlose Bahn 7 Doppelkleber aufgewickelt ist. Die endlose Etikettenbahn 5 ist an ihrer Rückseite selbstklebend ausgebildet und in der Rolle 2 mit einer Schutzfolie 8 aus Silikon versehen, die von der Etikettenbahn 5 abgezogen und zu einer Rolle 9 aufgewickelt wird. Die Etikettenbahn 5 besteht aus einer großen Anzahl von wahlweise bedruckten oder unbedruckten Etiketten, wobei die Etiketten bereits durch den vorgesehenen Aufdruck, beispielsweise ein Foto, eine Nummer oder dergleichen individualisiert sein können. Die Etikettenbahn 5 wird über eine Umlenkrolle 10 einer insgesamt mit Bezugszeichen 11 bezeichneten Verbindungsstation zugeführt, die weiter unten noch näher erläutert wird. Um ein unbeabsichtigtes Abwickeln der Bahn 2 zu unterbinden, sind weitere (nicht dargestellte) Führungs- und Umlenkwalzen vorgesehen. Die Führungs- und Umlenkwalzen bzw. -rollen sind in dem vorliegenden Ausführungsbeispiel in der Regel in bekannter Weise angetrieben, ohne daß diese jeweils erwähnt würde.

Der Verbindungsstation 11 wird ebenfalls die endlose Transponderbahn 6 zugeführt, die mittels eines Führungswalzenpaares 12 von der Rolle 3 abgezogen wird. Die Transponderbahn 6 besteht aus einer Vielzahl von aufeinanderfolgend auf einer Kunststoffbahn, insbesondere aus Polyester wegen der günstigen Dehnfestigkeit des Materials, vorgesehenen Transpondern. Die Transponder weisen eine auf dem Kunststoff ausgebildete Antennenbahn auf, die zum Beispiel durch Bonden mit einem ebenfalls auf dem Kunststoff angeordneten Mikrochip verbunden sein kann, und dann einen berührungslosen Datenaustausch mit entsprechend ausgebildeten Schreib- und/oder Leseeinrichtungen ermöglicht. Die berührungslose Transpondertechnologie als solche ist bekannt und bedarf daher keiner näheren Beschreibung.

Vor dem Erreichen der Verbindungsstation 11 passiert die Transponderbahn 6 eine Transponderprüfeinrichtung 13, in der die Transponder der Transponderbahn 6 einzeln auf Funktion überprüft werden. Die Transponderprüfeinrichtung 13 ist zweckmäßigerweise derart abgeschirmt, daß sie stets nur den gerade im Bereich der Prüfeinrichtung 13 befindlichen Transponder überprüft. Das Ergebnis der Prüfung wird einer (nicht dargestellten) Steuerung der Vorrichtung 1 übermittelt, damit eventuell defekte Transponder im Bereich der Verbindungsstation 11 ausgesondert werden können, wie weiter unten noch näher erläutert wird.

Des Weiteren sind im Bereich der Transponderbahn 6 Positionskontrolleinrichtungen 14 vorgesehen, die im einfachsten Fall die äußerste Leiterbahn jedes Transponders erfassen und damit eine Aussage über die Zuführgenauigkeit der Transponderbahn 6 ermöglichen.

Die Verbindungsstation 11 umfaßt eine Hohlwalze 15, die antreibbar auf einem Zylinder 16 sitzt, mit dem sie über Löcher 15a in der Hohlwalze 15 verbunden ist. Der Zylinder 16 ist in zwei Kammern 16a, 16b unterteilt, von denen die eine 16a gegenüber der Umgebungsatmosphäre einen Unterdruck und die andere 16b einen Überdruck aufweist, zum Beispiel über eine (nicht dargestellte) Vakuumpumpe. Die Kammern 16a, 16b halbieren vorliegend den Zylinder 16, können aber auch z.B. zu zwei Dritteln Umfang des Zylinders mit Unterdruck und zu einem Drittel mit Überdruck abgeteilt ausgebildet sein.

Die Verbindungsstation 11 umfaßt ferner eine Schneideinheit 17, die von der Steuerung zum Ausführen einer Schnittbewegung antreibbar ist und die derart angesteuert wird, daß sie in einem Augenblick, in dem die Abzugsbewegung der Transponderbahn 6 gestoppt ist, genau einen, nämlich den vordersten, Transponder 6a, von der Transponderbahn 6 ablängt. Die Schneideinheit 17 kann als Schneiddraht, als quer zur Transponderbahn 6 verlagerbares Messer, als Balkenmesser, aber auch als Schneidlaser oder anderes Schneidmittel ausgebildet sein. Der abgetrennte Abschnitt 6a des Transponderbandes 6, der im Regelfall einen einzigen Transponder 6a aufweisen wird, wird auf der Hohlwalze 15 durch die in dieser vorgesehenen Löcher 15a und des hierdurch übertragenen Saugeffekts gehalten. Damit ist ein positions- und lagegenaues Zuführen des Transponders 6a zu der an der Hohlwalze 15 vorbei geführten Etikettenbahn 5 möglich.

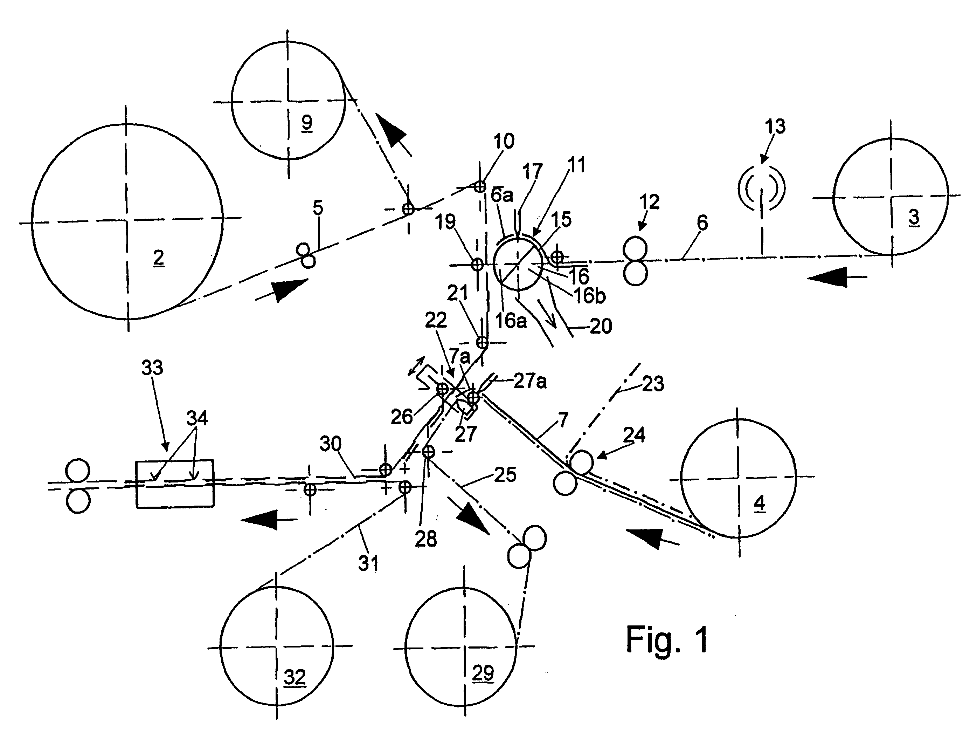

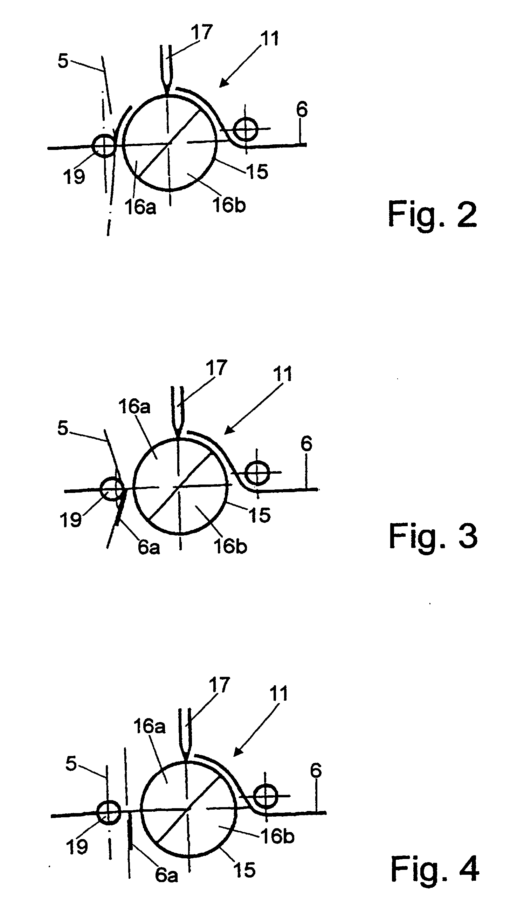

Die Etikettenbahn 5 wird mit Ihrer Klebeseite der Hohlwalze 15 zugewandt an dieser vorbeigeführt. Wenn aufgrund der Prüfung in der Transponder-Prüfstation 13 der zur Verbindung mit dem nächsten Etikett anstehende Transponder 6a als funktionsfähig befunden wurde, wird der abgetrennte Transponder 6a von der Hohlwalze 15 wie in Fig. 2 bis 4 gezeigt zunächst in Richtung auf eine solche Position verlagert, in der die Stirnseite des Transponders 6a im Wesentlichen zu der Etikettenbahn 5 parallel verläuft. Eine zur Verbindungsstation 11 gehörende Andrückwalze 19 wird dann in Richtung auf die Hohlwalze 15 verlagert und bewirkt, daß die Stirnseite des abgetrennten Transponders 6a mit der diesem zugewandten Klebefläche der Etikettenbahn 5 in Berührung gelangt, wobei eine gleichzeitige Drehung der Hohlwalze 15 zur Unterstützung möglich, aber nicht zwingend erforderlich ist. Es ist bei Drehung der Hohlwalze 15 jedoch möglich, bereits die Transponderbahn 6 für den nächsten Schritt vorzuschieben. Der Transponder 6a wird durch die Klebeseite der Etikettenbahn 5 gehalten und mit der Etikettenbahn 5 durch das Walzenpaar 19, 15 hindurchgeführt, und es entsteht eine Verbindung der beiden genannten Teile. Im Anschluß hieran wird die Andrückwalze 19 wieder in ihre in Fig. 1 gezeigte Ausgangsstellung zurückgezogen.

Wenn die Steuerung aufgrund einer Fehlermeldung der Prüfeinrichtung 13 einen defekten Transponder 6a meldet, wird anstelle eines Auslösens der Andrückwalze 19 der defekte Transponder 6a mit der Hohlwalze 15 um 180° weitergedreht, wo die Druckseite des Zylinders 16 die Löcher 15a in der Hohlwalze 15 beaufschlagt und den auszusondernden Transponder 6a in ein Ausschußgefäß 20, das unter leichtem Unterdruck steht, abwirft.

Durch die Überprüfung der Transponder vor der Vereinzelung und die selektive Ansteuerung der Verbindungsstation 11 dahingehend, ob der Transponder 6a aufgrund des Prüfergebnisses mit einem Etikett verbunden werden soll oder ausgeschieden werden soll, ist es möglich, nur funktionsfähige Transponder 6a mit jeweils einem Etikett der Etikettenbahn 5 zu verbinden und damit eine kostspielige Ausschußproduktion zu unterbinden.

Man erkennt, daß die Etiketten zumindest in einer Richtung eine wesentlich größere Erstreckung als die Transponder aufweisen können. Durch das Abtrennen eines Transponders 6a von der Transponderbahn 6 ist es möglich, die Transponderbahn mit einer hohen Packungsdichte auf der Rolle 3 anzuordnen, ohne die Abstände der Transponder in der Transponderbahn 6 an die Länge der Etiketten der Etikettenbahn 5 anpassen zu müssen.

Über eine Umlenkrolle 21 wird die mit den Transpondern versehene Etikettenbahn 5 einer weiteren Arbeitsstation 22 zugeführt, die auf einem Schlitten oder dergl. in Richtung der Bewegung der Bahn 5 verlagerbar ist, um sie mit den Abmessungen der Etiketten 5 bzw. der Transponder 6a und den Übergabezyklen der Übergabestation 11 taktweise abstimmen zu können.

Der Arbeitsstation 22 wird die Doppelkleberbahn 7 zugeführt, die auf der Rolle 4 aufgewickelt ist. Eine erste Schutzfolie 23 wird im Anschluß an ein angetriebenes Führungswalzenpaar 24 abgezogen und auf einer (nicht dargestellten) Rolle gespeichert. Von der Doppelkleberbahn 7, die einseitig mit einer weiteren Trägerfolie 25 versehen ist, wird im Bereich der Station 22 jeweils ein Nutzen 7a vermittels eines als Schneidrolle 27a ausgebildeten Schneidmittels abgeschnitten und auf die der Etikettenbahn 5 abgekehrte Seite des an dem Etikett 5 haftenden Transponders 6a aufgeklebt. Der Nutzen 7a wird hierbei über einen gegen die Trägerfolie 25 gerichteten Vorsprung 27 geführt, wobei zugleich eine Anpreßwalze 26 derart gegen die Etikettenbahn 5 drückt, daß der Nutzen 7a den Transponder 6a an der Etikettenbahn 5 bedeckt.

Es ist zu bemerken, daß der Nutzen 7a unmittelbar vor dem Aufbringen von der Doppelkleberbahn 7 abgeschnitten wird. Hierdurch wird einerseits sichergestellt, daß der einmal vorgenommene Schnitt aufgrund der Materialkonsistenz des Doppelklebers nicht wieder verläuft und eine unerwünschte Verbindung zwischen dem Nutzen 7a und der Doppelkleberbahn 7 bewirkt. Ferner ist sichergestellt, daß bei Störungen im Bereich der Arbeitsstation 22 lediglich ein Nutzen 7a des Doppelklebers verbleibt, wodurch der Wartungsund Reinigungsaufwand entsprechend herabgesetzt ist.

Die Trägerfolie 25 wird ausgangs der Station 22 über eine Umlenkwalze auf einer Speicherrolle 29 abgelegt. Die aufgrund der vorstehend beschriebenen Arbeitschritte hergestellte Bahn 30 aus selbstklebenden Datenträgern mit integrierten Transpondern wird auf ihrer Klebeseite mit einem Substrat, vorliegend eine Schutzfolie 31 aus Silikon, die von einer Rolle 32 abgezogen wird, belegt, wobei in einer Egalisierstation 33 die resultierende geglättet wird. Die Bahn 30 kann ohne weitere Funktionsprüfung wieder zu einer Rolle aufgewickelt werden. In der Egalisierstation 33 sind mit Bezugszeichen 34 angedeutete Stanzeinheiten vorgesehen, die das Etikett aus der Bahn 30 ausstanzen oder zumindest soweit anschneiden, daß sich die Etiketten, die eine beliebige Außenkontur aufweisen können, leicht von der Schutzfolie 31 ablösen lassen.

Mit dem vorstehend geschilderten Verfahren ist sichergestellt, daß keine defekten Transponder in die hergestellte Datenträgerbahn 30 eingearbeitet werden, die ein aufwendiges Heraustrennen und Nachbessem und anschließendes Wiederverbinden der Datenträgerbahn 30 nach sich ziehen würden.

Die Vorrichtung 1 arbeitet getaktet, das heißt bei jedem Takt wird - vorausgesetzt ein funktionsfähiger Transponder 6a steht zur Verbindung mit der Etikettenbahn 5 an - ein Etikett in den Bereich der Station 11 geführt, und dort gegebenenfalls durch kleine Schritte positioniert. Zu diesem Zwecke können die Umlenkwalzen angetrieben sein. Gleichzeitig wird jeweils ein Nutzen 7a in der Station 22 auf die Etikettenbahn 5 aufgebracht, wobei der Arbeitstakt der Vorrichtung 1 zu diesem Zwecke synchronisiert ist. Da im Bereich der Egalisierstation 33 für das Ausstanzen eine sehr genaue Positionierung für den Schnitt erforderlich ist, kann zur Regelung der synchronisierten Vorschübe für die Bahnen 5, 6, 7 und 30 eine dort vorgesehene Druckbilderkennung herangezogen werden.

Im Anschluß an die Egalisierstation kann die Datenträgerbahn 30 auch gelocht und gefalzt werden.

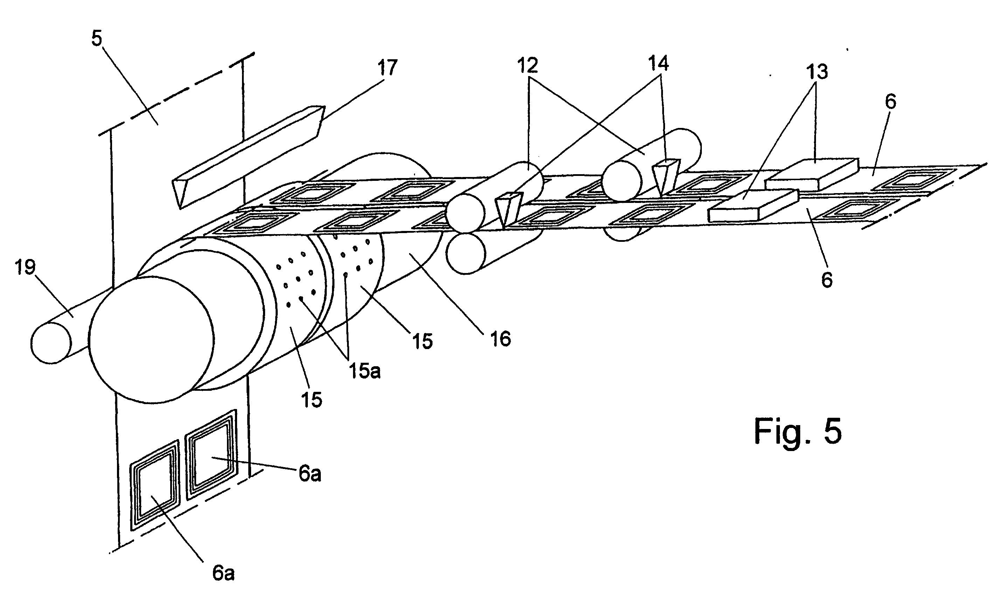

Die Herstellung der Datenträgerbahn 30 ist vorstehend anhand eines Ausführungbeispiels erläutert worden, bei dem jeweils ein einziger Transponder 6a auf eine Etikettenbahn 5 aufgebracht wurde. Es ist aber möglich, eine Mehrzahl von Transponderbahnen 6 parallel zueinander der Verbindungsstation 11 zuzuführen, wobei die Transponder 6a als Bahnen 6 von einer entsprechenden Anzahl von Rollen 3 abgezogen werden, um die Transponder 6a wahlweise auf eine gemeinsame oder auf zwei ebenfalls parallel geführte Etikettenbahnen 5 aufzubringen, vergl. Fig. 5. Es versteht sich, daß im Falle eines defekten Transponders die diesem zugeordnete Transponderbahn 6 vor dem Erreichen der Schneideinheit 17 alleine vorgezogen und abgetrennt und anschließend in das Ausschußgefäß 20 abgeführt wird, während für die als funktionsfähig befundenen Transponder die Transponderbahnen 6 angehalten und somit nicht vorgeschoben werden. Die hierdurch auftretenden Verzögerungen bei den parallelen Bahnen 6 sind gering und beeinträchtigen die dann im Takt wieder ablaufende Verbindung der Transponder 6a mit der Etikettenbahn 5 nicht oder nur in vernachlässigbarem Umfang. Ebenso kann ein Zwischenschnitt vorgesehen werden, bei dem ein jeweils in der Transponderbahn 6 vorgesehener Abschnitt zwischen zwei benachbarten Transpondern in der Station 11 herausgetrennt und dem Ausschußbehälter 20 zugeführt wird. Dies erfolgt zweckmäßigerweise bei mehreren parallelen Transponderbahnen jeweils simultan. Beim gleichzeitigen parallelen Herstellen mehrerer Datenträger erfolgt vorzugsweise die Verbindung mit einer einheitlichen Etikettenbahn 5, die erst im Bereich nach der Egalisierstation 33 und nach erfolgtem Abgittem des Randes bei Bedarf zu mehreren Datenträgerbahnen längstgeschnitten wird. Auch die Doppelklebemutzen 7a werden dann vorzugsweise auf einer gemeinsamen Trägerfolie mit ggf. mehreren Streifen Doppelkleber zugeführt.

Es ist somit vorteilhaft möglich, in der Verbindungsstation 11 mehrere Transponder 6a gleichzeitig mit einer oder mehreren Etikettenbahnen 5 zu verbinden, wobei die gleichzeitig im Takt zugeführten Transponderbahnen 6 und auch die Doppelkleberbahnen 7 synchronisiert angetrieben sind. Es versteht sich, daß ggf. die vorstehend für eine einzelne Datenträgerbahn 30 erforderlichen Mittel entsprechend der Anzahl der herzustellenden Bahnen mehrfach vorgesehen werden müssen, aber die Verbindungsstation 11 wird hierzu vorteilhaft und kostengünstig nur einfach benötigt. Vorzugsweise sind bis zu 5 Spuren für die gleichzeitige Zuführung von Transponderbahnen vorgesehen. Entsprechend kann die Vorrichtung 1 universell für kleinformatige Datenträger ebenso wie für großformatige Datenträger eingesetzt werden

Die Erfindung ist vorstehend anhand eines Ausführungsbeispiels erläutert worden, bei der die hergestellten Datenträger Etiketten sind. Ebenso gut können aber Datenträger in Gestalt von Karten im Kreditkartenformat oder in einem anderen Format hergestellt werden, indem die sich ergebende Bahn 30 auf eine in einer vor der Egalisierstation 33 angeordneten Kaschierstation auf eine endlose Kunststoff- oder Kartonbahn als Substrat aufgebracht wird. Die Klebeverbindung kann mittels des auf der Bahn 30 vorgesehenen Doppelklebernutzens 7a hergestellt werden, alternativ aber auch durch die klebende Überschußfläche des Etiketts 5 oder durch eine Klebefläche des Substrats, wodurch die Station 22 entbehrlich wird. Wird ein Sicherheitskleber eingesetzt, kann die Karte bei geringen Kosten als zerstörungssicherer Ausweis oder dgl. eingesetzt werden. Ebenso kann das Substrat aus Papier bestehen. Bei Kunststoffkarten kann im Anschluß an das Egalisieren ein Ausstanzen der Datenträger und anschließendes Stapeln erfolgen. Die auf diesem Weg hergestellte Karte ist gegenüber einer laminierten Karte wesentlich preiswerter in der Herstellung. Wird z.B. Karton oder Papier kaschiert, entsteht ein mit einem Transponder ausgestatteter Datenträger, der eine Gestalt vergleichbar einem konventionellen Ticket oder Label aufweist und somit in allen hierzu ausgebildeten, z.B. Rollen oder Leporellofaltungen verarbeitenden Automaten verarbeitet werden kann. Eine bevorzugte Anwendung für ein solches Ticket sind z.B. intelligente Bus- oder U-bahn-Fahrscheine. Eine bevorzugte Anwendung für einen selbstklebenden Datenträger sind z.B. Postgutbegleitkarten oder Preisetiketten in einem Supermarkt.

## Patentansprüche

1. Verfahren zum Herstellen von Datenträgem mit integrierten Transpondern, bei dem die Transponder (6a) in einer Transponderbahn (6) zugeführt werden und einerseits mit einem Etikett (5) belegt werden,
wobei die Transponder (6a) vor dem Zusammenführen mit einem zugeordneten Etikett (5) vereinzelt und ausgerichtet werden,
**dadurch gekennzeichnet,**
**daß** die Transponder (6a) vor dem Zusammenführen mit dem Etikett (5) auf Funktion geprüft werden.

2. Verfahren nach Anspruch 1, **dadurch gekennzeichnet, daß** funktionsunfähige Transponder (6a) nach dem Vereinzeln aus der Fertigung ausgestoßen werden.

3. Verfahren nach Anspruch 1 oder 2, **dadurch gekennzeichnet, daß** die Transponderbahn (6) radial einer Walze (15) zugeführt wird, auf der diese gehalten wird und der vorderste Transponder (6a) von der Transponderbahn (6) abgelängt wird.

4. Verfahren nach Anspruch 3, **dadurch gekennzeichnet, daß** die Walze (15) mit Löchern (15a) versehen ist, die einen an der Walze (15) anliegenden Über- bzw. Unterdruck zum Ansaugen bzw. Abstoßen der Transponderbahn (6) aufweisen.

5. Verfahren nach einem der Ansprüche 1 bis 4, **dadurch gekennzeichnet, daß** eine Andrückwalze (19) die Etikettenbahn (5) in Richtung auf den vereinzelten und mit dieser ausgefluchtet gehaltenen Transponder (6a) drückt.

6. Verfahren nach einem der Ansprüche 1 bis 5, **dadurch gekennzeichnet, daß** die Transponderbahn (6) mit Markierungen versehen ist, die eine Positionskontrolle und Korrektur ermöglichen.

7. Verfahren nach einem der Ansprüche 1 bis 6, **dadurch gekennzeichnet, daß** dem an dem Etikett (5) haftenden Transponder (6a) ein von einer Bahn Doppelkleber (7) abgetrennter Nutzen (7a) aufgebracht wird.

8. Verfahren nach einem der Ansprüche 1 bis 7, **dadurch gekennzeichnet, daß** der Doppelkleber in einem endlosen Band (7) einer Schneide- und Übergabestation (22) zugeführt wird, in der der Doppelkleber den Transponder (6a) und das Etikett (5) auf seiner der Druckseite abgewandten Seite belegt.

9. Verfahren nach einem der Ansprüche 1 bis 8, **dadurch gekennzeichnet, daß** die mit den Transpondern (6a) versehene Etikettenbahn (5) auf ein Substrat aufgeklebt wird.

10. Verfahren nach Anspruch 9, **dadurch gekennzeichnet, daß** das Substrat als bahnförmiges Material (31) der mit den Transpondern versehene Etikettenbahn (5) zugeführt wird.

11. Verfahren nach Anspruch 10, **dadurch gekennzeichnet, daß** das bahnförmige Material (31) ausgewählt ist aus der Gruppe umfassend Kunststoff, Papier, Karton und Silikon.

12. Verfahren nach einem der Ansprüche **1** bis **11, dadurch gekennzeichnet, daß** die hergestellten Datenträger wenigstens teilweise von der Datenträgerbahn durch Stanzen (33) getrennt werden.

13. Vorrichtung zum Herstellen von Datenträgem mit integriertem Transponder, umfassend
Mittel zum Zuführen einer Bahn von Etiketten (5);
Mittel zum Zuführen einer Bahn (6) aus aneinander grenzenden Transpondern; und
eine Verbindungsstation (11) zum Schneiden und Vereinzeln der Transponder (6a) von der Transponderbahn (6), die die die Transponder (6a) von der Bahn (6) trennt und vereinzelt und an die Etikettenbahn (5) einzeln übergibt;
**dadurch gekennzeichnet,**
**daß** vor der Verbindungsstation (11) eine Transponderprüfeinrichtung angeordnet ist, die die Transponder (6a) auf Funktion prüft.

14. Vorrichtung nach Anspruch 13, **dadurch gekennzeichnet, daß** die Verbindungsstation (11) eine Walze (15) umfaßt, die die Transponderbahn (6) durch Unterdruck fixiert.

15. Vorrichtung nach Anspruch 14, **dadurch gekennzeichnet, daß** im Bereich der Walze (15) eine Schneideinheit (17) angeordnet ist, die den jeweils vordersten Transponder (6a) von der Transponderbahn (6) abtrennt.

16. Vorrichtung nach einem der Ansprüche 14 oder 15, **dadurch gekennzeichnet, daß** die Verbindungsstation (11) eine Andrückrolle (19) umfaßt, die in Richtung auf die Walze (15) verlagerbar ist, um bei ausgefluchteter Stirnseite des abgetrennten Transponders (6a) die Etikettenbahn (5) gegen die Hohlwalze (15) zu pressen und den Transponder (6a) mitzunehmen.

17. Vorrichtung nach einem der Ansprüche 14 bis 16, **dadurch gekennzeichnet, daß** die Steuerung der Walze (15) bei von der Transponderprüfeinrichtung (13) erkannten schlechten Transpondern (6a) diese zum Ausstoßen des schlechten Transponders (6a) veranlaßt.

18. Vorrichtung nach einem der Ansprüche 13 bis 17, **dadurch gekennzeichnet, daß** im Bereich der Verbindungsstation (11) ein Ausschußsammelgefäß (20) vorgesehen ist, in das als schlecht erkannte Transponder (6a) ausgestoßen werden.

19. Vorrichtung nach einem der Ansprüche 13 bis 18, **dadurch gekennzeichnet, daß** Mittel zum Zuführen eines bahnförmigen Doppelklebers (7) vorgesehen sind.

20. Vorrichtung nach einem der Ansprüche 13 bis 19, **dadurch gekennzeichnet, daß** der Verbindungsstation (11) eine nachgelagerte, in Richtung der Verlagerungsbewegung des Etikettenbahn (5) verschiebbare Arbeitssation (22) angeordnet ist, in der der an der Etikettenbahn (5) haftende Transponder (6a) mit einem Nutzen (7a) aus Doppelkleber (7) belegt wird.

21. Vorrichtung nach Anspruch 20, **dadurch gekennzeichnet, daß** die Arbeitsstation (22) eine Anpreßwalze (26) umfaßt, mit der die Etikettenbahn (5) mit dem daran haftenden Transponder (6a) gegen den abgetrennten Nutzen (7a) verlagerbar ist.

22. Vorrichtung nach einem der Ansprüche 13 bis 21, **dadurch gekennzeichnet, daß** wenigstens einer der Bahnen (5, 6, 7, 30) Mittel (14) zum Erkennen von Markierungen auf den Bahnen zugeordnet sind, die mit der Steuerung verbunden sind.

23. Vorrichtung nach einem der Ansprüche 13 bis 22, **dadurch gekennzeichnet, daß** die für die Verlagerung der Bahnen (5, 6, 7, 30) ausgebildeten Antriebe getaktet ansteuerbar sind und von der Steuerung synchronisiert werden.

24. Vorrichtung nach einem der Ansprüche 13 bis 23, **dadurch gekennzeichnet, daß** eine zumindest der Verbindungsstation (11) nachgelagerte Kaschierstation vorgesehen ist, der ein bahnförmiges Substrat zugeführt wird.

25. Vorrichtung nach Anspruch 24, **dadurch gekennzeichnet, daß** das Substrat die Unterseite des Datenträgers definiert, und daß die Druckseite der Etikettenbahn (5) die Oberseite des Datenträgers definiert.

26. Vorrichtung nach Anspruch 24 oder 25, **dadurch gekennzeichnet, daß** das Substrat wenigstens teilweise mit einer Klebeoberfläche versehen ist.

27. Vorrichtung nach einem der Ansprüche 13 bis 26, **dadurch gekennzeichnet, daß** eine zumindest der Verbindungsstation (11) nachgelagerte Egalisierstation vorgesehen ist, in der ein Stanzwerkzeug angeordnet ist; um die hergestellten Datenträger wenigstens teilweise von der Datenträgerbahn (30) durch Stanzen (33) zu trennen.

## Claims

1. A method for producing data carriers equipped with integrated transponders, in which the transponders (6a) are supplied in a transponder web (6) and are covered on one side with a label (5), wherein the transponders (6a) are separated and aligned before being assembled with an associated label (5),
**characterized in**
**that**, before being assembled with the label (5), the transponders (6a) are tested for function.

2. The method as claimed in claim 1, **characterized in that** unserviceable transponders (6a) are expelled from the production after being separated.

3. The method as claimed in claim 1 or 2, **characterized in that** the transponder web (6) is supplied radially to a roll (15), on which said web is held and the foremost transponder (6a) is cut from the transponder web (6).

4. The method as claimed in claim 3, **characterized in that** the roll (15) is provided with holes (15a) which have a positive or negative pressure applied to the roll (15) for attracting by suction or repelling the transponder web (6).

5. The method as claimed in one of claims 1 to 4, **characterized in that** a pressure roll (19) presses the label web (5) in the direction of the transponder (6a) which has been separated and which is held in alignment therewith.

6. The method as claimed in one of claims 1 to 5, **characterized in that** the transponder web (6) is provided with markings which permit position monitoring and correction.

7. The method as claimed in one of claims 1 to 6, **characterized in that** a blank (7a) separated from a web of double-sided adhesive (7) is applied to the transponder (6a) adhering to the label (5).

8. The method as claimed in one of claims 1 to 7, **characterized in that** the double-sided adhesive is supplied in an endless strip (7) to a cutting and transfer station (22), in which the double-sided adhesive covers the transponder (6a) and the label (5) on its side facing away from the printed side.

9. The method as claimed in one of claims 1 to 8, **characterized in that** the label web (5) provided with the transponders (6a) is adhesively bonded to a substrate.

10. The method as claimed in claim 9, **characterized in that** the substrate is supplied as a web-like material (31) to the label web (5) provided with the transponders.

11. The method as claimed in claim 10, **characterized in that** the web-like material (31) is selected from the group comprising plastic, paper, board and silicone.

12. The method as claimed in one of claims 1 to 11, **characterized in that** the data carriers produced are at least partly separated from the data carrier web by punching (33).

13. An apparatus for producing data carriers equipped with an integrated transponder, comprising
means for supplying a web of labels (5);
means for supplying a web (6) of transponders adjoining one another;
a joining station (11) for cutting and separating the transponders (6a) from the transponder web (6), which divides the transponders (6a) from the web (6), separates them and transfers them individually to the label web (5),
**characterized in**
**that** a transponder testing device which tests the transponders (6a) for function is provided upstream the joining station.

14. The apparatus as claimed in claim 13, **characterized in that** the joining station (11) comprises a roll (15) which fixes the transponder web (6) by negative pressure.

15. The apparatus as claimed in claim 14, **characterized in that** in the area of the roll (15) there is arranged a cutting unit (17) which separates the respective foremost transponder (6a) from the transponder web (6).

16. The apparatus as claimed in either of claims 14 and 15, **characterized in that** the joining station (11) comprises a pressure roller (19) which can be displaced in the direction of the roll (15) in order to press the label web (5) against the hollow roll (15) with the front side of the separated transponder (6a) aligned and to carry the transponder (6a) with it.

17. The apparatus as claimed in one of claims 14 to 16, **characterized in that** when poor transponders (6a) are recognized by the transponder testing device, the control of the roll (15) causes the latter to expel the poor transponder (6a).

18. The apparatus as claimed in one of claims 13 to 17, **characterized in that** in the area of the joining station (11) there is provided a waste collecting vessel (20), into which transponders (6a) recognized as poor are expelled.

19. The apparatus as claimed in one of claims 13 to 18, **characterized in that** means for supplying a web-like double-sided adhesive (7) are provided.

20. The apparatus as claimed in one of claims 13 to 19, **characterized in that** an operating station (22) placed downstream of the joining station (11) and displaceable in the direction of the displacement movement of the label web (5) is arranged, in which the transponder (6a) adhering to the label web (5) is covered with a blank (7a) of double-sided adhesive (7).

21. The apparatus as claimed in claim 20, **characterized in that** the operating station (22) comprises a pressure roll (26), with which the label web (5) with the transponder (6a) adhering thereto can be displaced against the separated blank (7a).

22. The apparatus as claimed in one of claims 13 to 21, **characterized in that** at least one of the webs (5, 6, 7, 30) is assigned means (14) for recognizing markings on the webs, which means are connected to the controller.

23. The apparatus as claimed in one of claims 13 to 22, **characterized in that** the drives designed to displace the webs (5, 6, 7, 30) can be driven in a cyclic manner and are synchronized by the controller.

24. The apparatus as claimed in one of claims 13 to 23, **characterized in that** a lamination station placed downstream at least of the joining station (11) is provided, to which a web-like substrate is supplied.

25. The apparatus as claimed in claim 24, **characterized in that** the substrate defines the underside of the data carrier, and **in that** the printed side of the label web (5) defines the upper side of the data carrier.

26. The apparatus as claimed in claim 24 or 25, **characterized in that** the substrate is at least partly provided with an adhesive surface.

27. The apparatus as claimed in one of claims 13 to 26, **characterized in that** an equalizing station placed downstream at least of the joining station (11) is provided, in which there is arranged a punching tool in order to divide the data carriers produced at least partly from the data carrier web (30) by punching (33).

## Revendications

1. Procédé de fabrication de supports de données à transpondeurs intégrés, dans lequel les transpondeurs **(6a)** sont acheminés sur une bande **(6)** de transpondeurs et munis d'un côté d'une étiquette **(5),** les transpondeurs **(6a)** étant individualisés et orientés avant le regroupement avec une étiquette **(5)** associée,
**caractérisé en ce que** les transpondeurs **(6a)** subissent un contrôle fonctionnel avant le regroupement avec l'étiquette **(5).**

2. Procédé selon la revendication 1, **caractérisé en ce que** les transpondeurs **(6a)** défectueux sont rejetés de la fabrication après l'individualisation.

3. Procédé selon la revendication 1 ou 2, **caractérisé en ce que** la bande **(6)** de transpondeurs est introduite radialement sur un rouleau **(15)** sur lequel elle est tenue et le transpondeur **(6a)** du début est coupé de la bande **(6)** de transpondeurs.

4. Procédé selon la revendication 3, **caractérisé en ce que** le rouleau **(15)** est muni de trous **(15a)** qui présentent une surpression ou une dépression appliquée sur le rouleau **(15)** pour aspirer ou repousser la bande **(6)** de transpondeurs.

5. Procédé selon l'une des revendications 1 à 4, **caractérisé en ce qu'**un rouleau de pressage **(19)** appuie la bande d'étiquettes **(5)** en direction du transpondeur **(6a)** individualisé et tenu aligné avec elle.

6. Procédé selon l'une des revendications 1 à 5, **caractérisé en ce que** la bande **(6)** de transpondeurs est munie de marquages qui permettent un contrôle et une correction de position.

7. Procédé selon l'une des revendications 1 à 6, **caractérisé en ce que**, sur le transpondeur **(6a)** adhérant à l'étiquette **(5),** est appliqué un flan **(7a)** séparé d'une bande d'adhésif double face **(7).**

8. Procédé selon l'une des revendications 1 à 7, **caractérisé en ce que** l'adhésif double face est introduit sous forme de bande sans fin **(7)** dans un poste de découpage et de transfert **(22),** dans lequel l'adhésif double face recouvre le transpondeur **(6a)** et l'étiquette **(5)** sur sa face opposée à la face imprimée.

9. Procédé selon l'une des revendications 1 à 8, **caractérisé en ce que** la bande d'étiquettes **(5)** munie des transpondeurs **(6a)** est collée sur un substrat.

10. Procédé selon la revendication 9, **caractérisé en ce que** le substrat est acheminé sous forme de matériau en bande **(31)** jusqu'à la bande d'étiquettes **(5)** munie de transpondeurs.

11. Procédé selon la revendication 10, **caractérisé en ce que** le matériau en bande **(31)** est choisi parmi le groupe comprenant le plastique, le papier, le carton et la silicone.

12. Procédé selon l'une des revendications 1 à 11, **caractérisé en ce que** les supports de données fabriqués sont séparés au moins partiellement de la bande de support de données par estampage **(33)**.

13. Dispositif de fabrication de supports de données à transpondeur intégré, comprenant :
- des moyens d'acheminement d'une bande d'étiquettes **(5)**;
- des moyens d'acheminement d'une bande **(6)** de transpondeurs juxtaposés ; et
- un poste de liaison **(11)** pour couper et individualiser les transpondeurs **(6a)** depuis la bande **(6)** de transpondeurs, qui sépare et individualise les transpondeurs **(6a)** depuis la bande **(6)** et les transfère séparément sur la bande d'étiquettes **(5);**
**caractérisé en ce qu'**avant le poste de liaison **(11)** est placé un dispositif de contrôle de transpondeurs qui contrôle le fonctionnement des transpondeurs **(6a).**

14. Dispositif selon la revendication 13, **caractérisé en ce que** le poste de liaison **(11)** comprend un rouleau **(15)** qui fixe la bande **(6)** de transpondeurs par une dépression.

15. Dispositif selon la revendication 14, **caractérisé en ce qu'**au niveau du rouleau **(6)** est placée une unité de coupe **(17)** qui sépare le transpondeur **(6a)** du début depuis la bande de transpondeurs **(6).**

16. Dispositif selon la revendication 14 ou 15, **caractérisé en ce que** le poste de liaison **(11)** comprend un rouleau de pressage **(19)** qui peut être déplacé en direction du rouleau **(15)** pour presser la bande d'étiquettes **(5)** sur le rouleau creux **(15)** avec la face frontale du transpondeur **(6a)** alignée et entraîner le transpondeur **(6a).**

17. Dispositif selon l'une des revendications 14 à 16, **caractérisé en ce que**, dans le cas de transpondeurs **(6a)** reconnus mauvais par le dispositif **(13)** de contrôle de transpondeurs, la commande du rouleau **(15)** provoque le rejet du transpondeur mauvais **(6a).**

18. Dispositif selon l'une des revendications 13 à 17, **caractérisé en ce qu'**au niveau du poste de liaison **(11)**, il est prévu un récipient de collecte de rebuts **(20)** dans lequel sont rejetés les transpondeurs **(6a)** reconnus mauvais.

19. Dispositif selon l'une des revendications 13 à 18, **caractérisé en ce que** des moyens d'acheminement d'un adhésif double face **(7)** en bande sont prévus.

20. Dispositif selon l'une des revendications 13 à 19, **caractérisé en ce que** le poste de liaison **(11)** est suivi d'un poste de travail **(22)** mobile dans la direction du mouvement de déplacement de la bande d'étiquettes **(5),** poste auquel le transpondeur **(6a)** collé sur la bande d'étiquettes **(5)** est pourvu d'un flan **(7a)** en adhésif double face **(7).**

21. Dispositif selon la revendication 20, **caractérisé en ce que** le poste de travail **(22)** comprend un rouleau de pressage **(26)** avec lequel la bande d'étiquettes **(5)** avec le transpondeur **(6a)** collé à elle peut être déplacée contre le flan **(7a)** séparé.

22. Dispositif selon l'une des revendications 13 à 21, **caractérisé en ce qu'**à au moins l'une des bandes **(5, 6, 7, 30)** sont associés des moyens **(14)** pour détecter des marquages sur des bandes, qui sont reliés à la commande.

23. Dispositif selon l'une dés revendications 13 à 22, **caractérisé en ce que** les entraînements formés pour le déplacement des bandes **(5, 6, 7, 30)** peuvent être commandés de manière cadencée et sont synchronisés par la commande.

24. Dispositif selon l'une des revendications 13 à 23, **caractérisé en ce qu'**un poste de doublage placé au moins après le poste de liaison **(11)** est prévu, auquel est acheminé un substrat en forme de bande.

25. Dispositif selon la revendication 24, **caractérisé en ce que** le substrat définit la face inférieure du support de données et **en ce que** la face imprimée de la bande d'étiquettes **(5)** définit la face supérieure du support de données.

26. Dispositif selon la revendication 24 ou 25, **caractérisé en ce que** le substrat est muni au moins partiellement d'une surface adhésive.

27. Dispositif selon l'une des revendications 13 à 26, **caractérisé en ce qu'**un poste d'égalisation placé au moins après le poste de liaison **(11)** est prévu, dans lequel est placé un outil d'estampage **(33)** afin, par estampage, de séparer au moins partiellement les supports de données fabriqués depuis la bande de supports de données **(30)**.
